# FASCICULE DE BREVET EUROPEEN

(11) **EP 1 067 039 B1**
(45) Date de publication et mention de la délivrance du brevet: **24.08.2005**
(21) Numéro de dépôt: 00401910.5
(22) Date de dépôt: 04.07.2000
(51) Int. Cl.: B62D 25/08, B62D 29/04

(54) **Structure avant de véhicule automobile**
Vorderstruktur eines Kraftfahrzeuges
Front structure of a motor vehicle

(30) Priorité: 06.07.1999 FR 9908690
(43) Date de publication de la demande: 10.01.2001
(73) Titulaire: COMPAGNIE PLASTIC OMNIUM, 69007 Lyon (FR)
(72) Inventeur: Pouget, Laurent, 01100 Oyonnax (FR); Gourlot, Thierry, 70100 Gray (FR)
(74) Mandataire: Leszczynski, André

(56) Documents cités:
- FR-A- 2 655 605
- FR-A- 2 761 330
- PATENT ABSTRACTS OF JAPAN vol. 006, no. 146 (M-147), 5 août 1982 (1982-08-05) & JP 57 066046 A (NISSAN MOTOR CO LTD), 22 avril 1982 (1982-04-22)

## Description

La présente invention concerne une structure avant de véhicule automobile.

A l'avant des véhicules automobiles traditionnels, on trouve généralement une traverse de pare-chocs, une grille d'entrée d'air et éventuellement une pièce inférieure qui peut être une armature de spoiler, une protection moteur ou un appui bas pour les chocs avec les piétons.

Ces différentes parties sont constituées par des pièces séparées réalisées en divers matériaux, qui sont assemblées sur le véhicule, généralement par vissage, en des points d'encrage prédéterminés.

Ces pièces sont conçues séparément afin de présenter chacune les propriétés mécaniques requises, selon ses propres fonctions.

Il en résulte que l'ensemble constitué par ces trois pièces présente un poids relativement important, chaque pièce devant assumer seule la fonction qui lui incombe.

La demande de brevet japonais JP 57 066046 décrit une structure comportant une traverse destinée à recevoir un pare-chocs tel que décrite dans le préambule de la revendication 1.

Une telle structure de support ne comporte pas de pare-chocs, ce dernier étant constitué par une pièce distincte rapportée.

La présente invention vise à fournir une nouvelle structure avant de véhicule automobile dans laquelle la synergie opérée entre les différentes pièces permet de réduire globalement le poids de l'ensemble.

Une telle structure est prévue pour recevoir une peau de bouclier la recouvrant partiellement ou intégralement.

La présente invention a pour objet une structure avant de véhicule automobile, telle que décrite par la revendication 1.

Dans un mode de réalisation particulier, la structure comporte une troisième partie à l'opposé de la traverse par rapport à la grille.

Dans la structure selon l'invention, la liaison continue qui existe entre deux pièces adjacentes permet à chacune des parties de conférer de la rigidité à sa ou ses voisines, de sorte que chaque partie considérée isolément, peut être rendue moins résistante ou moins rigide que la pièce correspondante qui devrait être utilisée séparément.

Par ailleurs, le fait de réaliser plusieurs parties d'un seul tenant procure des avantages qui se traduisent par un moindre prix de revient, à la fois en termes de fabrication, étant donné qu'une moindre quantité de matière plastique est requise pour obtenir les parties, et en termes de montage, étant donné que la structure d'un seul tenant requiert moins de manipulations pour sa mise en place dans le véhicule.

La structure en matière plastique selon l'invention peut, en outre, intégrer des fonctions spécifiques, simplement en prévoyant les formes correspondantes dans l'empreinte du moule.

Dans un mode de réalisation particulier de l'invention, la grille est une grille pare-pierres.

Dans un autre mode de réalisation particulier de l'invention, la traverse de pare-chocs comporte des absorbeurs de chocs intégrés, par exemple sous la forme de bossages ovoïdaux ou en nid d'abeilles.

Dans le mode de réalisation dans lequel la structure comporte une troisième partie, cette dernière peut consister en une protection sous moteur ou en un convergeant, lequel sert de guide d'air pour le flux d'air passant sous le véhicule, ou encore en un appui bas, lequel forme une partie en saillie à l'avant du véhicule, dont la fonction, en cas d'accident avec un piéton, est de venir heurter les jambes du piéton en dessous du genou en même temps que le pare-chocs impacte les jambes au-dessus du genou.

Dans une réalisation particulière, la structure reçoit une peau de bouclier la recouvrant partiellement ou intégralement, ne jouant qu'un rôle esthétique, les efforts en cas de choc étant en totalité absorbés par la structure.

Il est intéressant de noter que l'allégement de poids obtenu grâce à selon l'invention peut également se traduire par l'adoption d'une peau de bouclier plus fine que dans les structures traditionnelles, du fait, que selon l'invention, cette peau ne remplit qu'un rôle esthétique, les efforts étant en totalité absorbés par la structure.

Dans le but de mieux faire comprendre à l'invention, on va en décrire maintenant deux modes de réalisation donnés à titre d'exemples non limitatifs de la portée de l'invention, en référence au dessin annexé dans lequel :
- la figure 1 est une vue en perspective de trois quarts avant d'une structure selon un premier mode de réalisation de l'invention,
- la figure 2 est une vue en perspective de trois quarts arrière de la structure de la figure 1,
- la figure 3 est une vue en perspective de trois quarts avant d'une structure selon un deuxième mode de réalisation de l'invention,
- la figure 4 est une vue en perspective de trois quarts arrière de la structure de la figure 3.

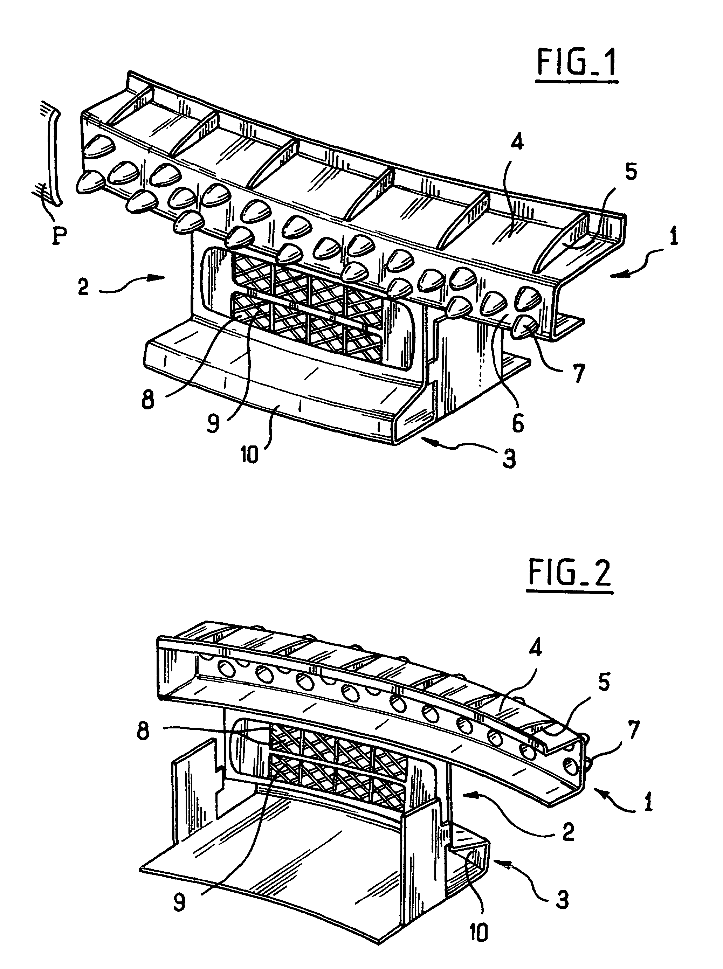

La structure des figures 1 et 2 comprend une traverse supérieure de pare-chocs 1, une grille pare-pierres 2 et une protection sous moteur 3 servant également d'appui-bas.

L'ensemble est réalisé d'un seul tenant en matière plastique, par exemple en polypropylène.

La traverse supérieure 1 présente une section en C. Elle est renforcée sur sa face supérieure 4 par des nervures 5 parallèles à la direction d'écrasement en cas de choc frontal.

La face frontale 6 de la traverse supérieure est pourvue d'absorbeurs ovoïdaux saillants 7 lesquels, comme les nervures 5, sont issus de moulage avec la structure.

La grille pare-pierres 2 est une plaque ajourée dans sa partie centrale, dont les ouvertures 8 permettent le passage d'un flux d'air vers un radiateur (non représenté) monté derrière ladite grille 2. Ses ouvertures 8 sont dimensionnées de manière à retenir les pierres qui pourraient, lors du roulement, endommager le radiateur.

La même matière plastique étant utilisée pour réaliser toute la structure, il est nécessaire de tenir compte de sa souplesse, qui est indispensable pour que la traverse puisse absorber les chocs, lors du dimensionnement des barreaux 9 constituant le maillage de la grille.

En d'autres termes, lors de la conception de la pièce, il convient de ne pas définir des barreaux trop minces, comme cela pourrait être le cas des grilles indépendantes de l'état de la technique, car de tels barreaux pourraient se déformer sous l'impact des pierres et en laisser quelques-unes atteindre le radiateur.

La protection sous moteur 3 est conformée de manière à rentrer sous le moteur (non représenté) à l'avant du véhicule, afin de protéger les pièces du moteur d'éventuels chocs avec de petits objets emportés par le flux d'air passant sous le véhicule.

La protection a également pour fonction de rendre ce flux d'air le plus laminaire possible, afin de ne pas trop freiner le véhicule en déplacement.

Enfin, on remarque que la protection sous moteur comporte une partie 10 saillante vers l'avant. Cette partie saillante 10 est un appui bas, dont le rôle est de constituer un point d'impact pour les jambes d'un piéton qui viendrait à être renversé par le véhicule.

Cet appui bas réalise un contre-appui à la traverse supérieure 1 qui atteint généralement la jambe au-dessus du genou du piéton, alors que l'appui bas touche la jambe en dessous du genou. La combinaison de ces deux points d'impact répartit l'effort sur la jambe et, surtout, évite que l'articulation du genou ne soit trop fortement sollicitée.

L'ensemble constituant la structure des figures 1 et 2 a une rigidité d'ensemble élevé, du fait que les liaisons entre parties s'étendent sur toute la largeur de la structure, et ce bien que chaque partie, considérée isolément, soit moins massive que la pièce équivalente dans une structure composite dans laquelle les pièces assemblées les unes aux autres par des fixations localisées.

La traverse 1 reçoit une peau P de bouclier, qui n'a été que partiellement et très schématiquement représentée dans un souci de clarté du dessin.

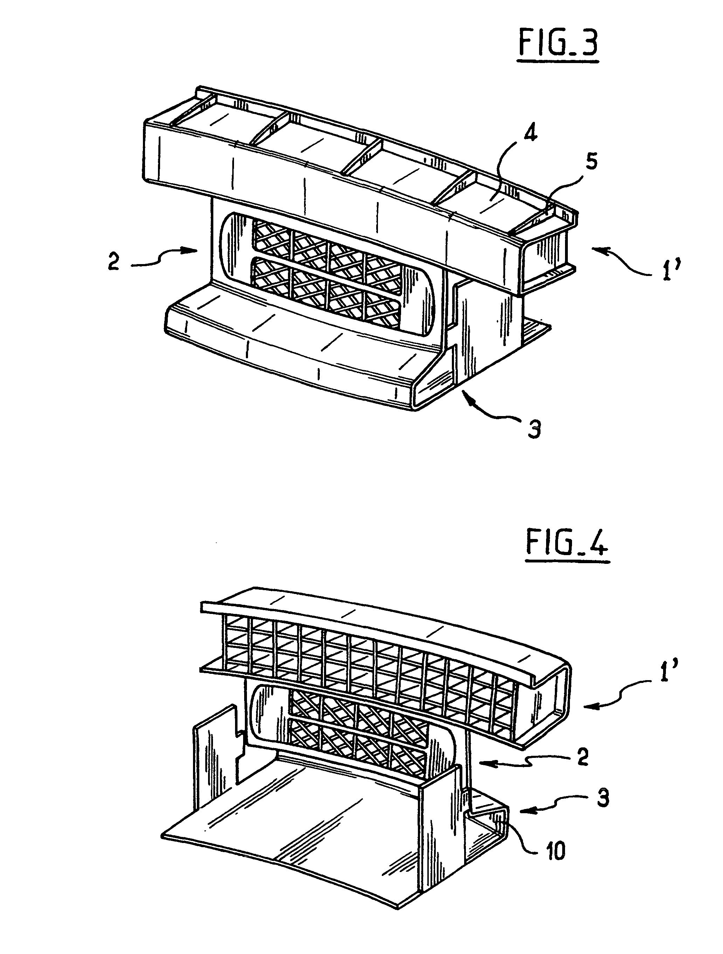

Dans le mode de réalisation des figures 3 et 4, seule la traverse 1' diffère de celle du précédent mode de réalisation.

La traverse 1' de ce second mode de réalisation comporte en effet, à la place des absorbeurs ovoïdaux, une structure en nid d'abeilles qui est mieux visible sur la figure 4.

## Revendications

1. Structure avant de véhicule automobile, comprenant au moins une traverse de pare-chocs (1 ; 1') et une grille (2), la structure étant réalisée d'un seul tenant en une seule pièce de matière plastique et étant **caractérisée par le fait que** la traverse de pare-chocs comporte des absorbeurs de chocs integrés.

2. Structure selon la revendication 1, **caractérisée par le fait qu'**elle comporte une troisième partie (3) à l'opposé de la traverse (1) par rapport à la grille (2).

3. Structure selon l'une quelconque des revendications 1 et 2, **caractérisée par le fait que** la grille (2) est une grille pare-pierres.

4. Structure selon l'une quelconque des revendications 1 à 3, **caractérisée par le fait que** les absorbeurs de chocs intégrés sont sous la forme de bossages ovoïdaux (7) ou de nid d'abeilles.

5. Structure selon la revendication 2, **caractérisée par le fait que** la troisième partie consiste en une protection sous moteur (3).

6. Structure selon la revendication 2, **caractérisée par le fait que** la troisième partie (3) consiste en un convergeant, qui sert de guide d'air pour le flux d'air passant sous le véhicule.

7. Structure selon la revendication 2, **caractérisée par le fait que** la troisième partie (3) consiste en un appui bas (10), lequel forme une partie en saillie de l'avant du véhicule, dont la fonction en cas d'accident avec un piéton, est de venir heurter les jambes du piéton en dessous du genou en même temps que le pare-chocs impacte la jambe au-dessus du genou.

8. Structure selon l'une quelconque des revendications précédentes, **caractérisée par le fait qu'**elle reçoit une peau (P) de bouclier la recouvrant partiellement ou intégralement, ne jouant qu'un rôle esthétique, les efforts en cas de chocs étant en totalité absorbés par la structure.

9. Structure selon l'une quelconque des revendications précédentes, **caractérisée par le fait qu'**elle comporte sur une face supérieure (4) de la traverse des nervures de renfort (5) parallèles à la direction d'écrasement en cas de choc frontal.

## Patentansprüche

1. Frontstruktur eines Kraftfahrzeugs, umfassend mindestens einen Stoßstangenträger (1; 1') und ein Gitter (2), wobei die Struktur einstückig aus einem einzigen Kunststoffbauteil hergestellt ist und **dadurch gekennzeichnet, dass** der Stoßstangenträger integrierte Stoßdämpfer aufweist.

2. Struktur nach Anspruch 1, **dadurch gekennzeichnet, dass** sie relativ zum Gitter (2) dem Träger (1) gegenüber einen dritten Teil (3) aufweist.

3. Struktur nach einem der Ansprüche 1 und 2, **dadurch gekennzeichnet, dass** das Gitter (2) ein Steinschutzgitter ist.

4. Struktur nach einem der Ansprüche 1 bis 3, **dadurch gekennzeichnet, dass** die integrierten Stoßdämpfer als eiförmige Vorsprünge (7) oder als Waben ausgebildet sind.

5. Struktur nach Anspruch 2, **dadurch gekennzeichnet, dass** der dritte Teil aus einem Motorunterschutz für den Motor (3) besteht.

6. Struktur nach Anspruch 2, **dadurch gekennzeichnet, dass** der dritte Teil (3) aus einem Leitblech besteht, das als Luftführung für die an der Unterseite des Fahrzeugs vorbeiströmende Luft dient.

7. Struktur nach Anspruch 2, **dadurch gekennzeichnet, dass** der dritte Teil (3) aus einer unteren Auflage (10) besteht, die vom vorderen Teil des Fahrzeugs vorspringt und deren Aufgabe es ist, bei einem Zusammenstoß mit einem Fußgänger, dessen Beine unterhalb des Knies zu berühren, während die Stoßstange gleichzeitig auf das Bein oberhalb des Knies auftrifft.

8. Struktur nach einem der vorangegangenen Ansprüche, **dadurch gekennzeichnet, dass** sie mit einer Stoßfängerhaut (P) versehen ist, die sie ganz oder teilweise bedeckt und ausschließlich ästhetischen Zwecken dient, da die gesamten unfallbedingten Kräfte von der Struktur aufgenommen werden.

9. Struktur nach einem der vorangegangenen Ansprüche, **dadurch gekennzeichnet, dass** sie auf einer Oberseite (4) des Trägers Verstärkungsrippen (5) aufweist, die parallel zur der Richtung verlaufen, in der bei einem Frontalaufprall eine Verformung stattfindet.

## Claims

1. A front structure for a motor vehicle, the structure comprising at least one bumper cross-member (1; 1') and a grille (2), the structure being made a single piece of plastics material and being **characterized by** the fact that the bumper cross-member comprises shock absorbers integrated therein.

2. A structure according to claim 1, **characterized by** the fact that it includes a third portion (3) on the opposite side of the grille (2) to the cross-member (1).

3. A structure according to claim 1 or 2, **characterized by** the fact that the grille (2) is an anti-chipping grille.

4. A structure according to any one of claims 1 to 3, **characterized by** the shock absorbers are in the form of egg-shaped bulges (7) or of a honeycomb.

5. A structure according to claim 2, **characterized by** the fact that the third portion consists in under-engine protection (3).

6. A structure according to claim 2, **characterized by** the fact that the third portion (3) consists in a converging portion for guiding the flow of air passing beneath the vehicle.

7. A structure according to claim 2, **characterized by** the fact that the third portion (3) consists in a bottom bar (10) forming a portion for projecting from the front of the vehicle and having the function in the event of a collision with a pedestrian of striking the legs of the pedestrian beneath the knee at the same time as the bumper strikes the leg above the knee.

8. A structure according to any preceding claim, **characterized by** the fact that it receives a shielding skin (P) covering it in part or in full, and performing an appearance function only, with any force in the event of an impact being fully being absorbed by the structure.

9. A structure according to any preceding claim, **characterized by** the fact that it comprises on a top face (4) of the cross-member reinforcing ribs (5) parallel to the direction of compression in the event of a front impact.
